# EUROPÄISCHE PATENTANMELDUNG

(11) **EP 1 102 192 A1**
(43) Veröffentlichungstag der Anmeldung: **23.05.2001**
(21) Anmeldenummer: 99122996.4
(22) Anmeldetag: 19.11.1999
(51) Int. Cl.: G06F 17/60

(54) **Sicherheitskontrollsystem für gerätebezogene Finanzierungsvorgänge**

(71) Anmelder: Brockmans, Rolf-Georg, 47877 Willich (DE)
(72) Erfinder: Brockmans, Rolf-Georg, 47877 Willich (DE)
(74) Vertreter: Stenger, Watzke & Ring Patentanwälte

(57) **Zusammenfassung**

Um ein Sicherheitskontrollsystem für gerätebezogene Finanzierungsvorgänge zu schaffen, welches es ermöglicht, Mehrfachfinanzierungen aufzudecken und zu vermeiden, wobei das System einfach aufgebaut und unter Nutzung technischer Gegebenheiten realisierbar sein soll, wird zur technischen Lösung mit der Erfindung vorgeschlagen ein Sicherheitskontrollsystem für gerätebezogene Finanzierungsvorgänge, umfassend wenigstens eine im wesentlichen zentral geführte Datenbank, in welcher für eine Gerät gerätetypische Daten aufgenommen und im Falle eines Finanzierungsvorganges finanzierungstypische Daten abfragbar ergänzt werden, eine Eintragungssoftware für die Datenaufnahme und -ergänzung sowie eine Abfragesoftware für die Abfrage von gerätebezogenen Finanzierungsvorgängen, wobei wenigstens die Abfragesoftware für eine Fernabfrage ausgelegt und auf einem Rechnernetzsystem installierbar ist.

## Beschreibung

Die vorliegende Erfindung betrifft ein Sicherheitskontrollsystem für gerätebezogene Finanzierungsvorgänge.

Es ist bekannt, daß bei einem Kauf oder Leasingvorgängen in Bezug auf Gegenstände letztlich geldgebende Kreditinstitute nach Vorlage von gerätebezogenen Daten Finanzierungen durchführen, ohne daß auf irgendeine Weise überprüfbar ist, ob dieselben Gegenstände bereits Finanzierungsobjekt sind. Derartige Leasing- oder Kaufvorgänge beziehen sich auf Massenartikel wie beispielsweise Autos und dergleichen, aber auch auf Spezialgeräte wie Kräne, Bagger, Maschinen und dergleichen. Häufig werden Gegenstände zum Zwecke der Erlangung von Liquidität mehrfach finanziert, was zwar einen betrügerischen Ausgangspunkt hat, jedoch nicht kontrollierbar ist. Unter Gegenständen im Sinne der vorliegenden Anmeldung ist jedes zu finanzierende Gut zu verstehen, also Gegenstände des täglichen Lebens, Autos, Schmuck, Elektrogeräte, Computer, Software sowie Spezialgeräte wie Gabelstapler, Kräne, Schiffe, Flugzeuge und dergleichen.

Es ist somit die **Aufgabe** der vorliegenden Erfindung, ein Sicherheitskontrollsystem für gerätebezogene Finanzierungsvorgänge zu schaffen, welches es ermöglicht, Mehrfachfinanzierungen aufzudecken und zu vermeiden, wobei das System einfach aufgebaut und unter Nutzung technischer Gegebenheiten realisierbar sein soll.

Zur technischen **Lösung** dieser Aufgabe wird mit der Erfindung vorgeschlagen ein Sicherheitskontrollsystem für gerätebezogene Finanzierungsvorgänge, umfassend wenigstens eine im wesentlichen zentral geführte Datenbank, in welcher für eine Gerät gerätetypische Daten aufgenommen und im Falle eines Finanzierungsvorganges finanzierungstypische Daten abfragbar ergänzt werden, eine Eintragungssoftware für die Datenaufnahme und -ergänzung sowie eine Abfragesoftware für die Abfrage von gerätebezogenen Finanzierungsvorgängen, wobei wenigstens die Abfragesoftware für eine Fernabfrage ausgelegt und auf einem Rechnernetzsystem installierbar ist.

Das erfindungsgemäße Sicherheitskontrollsystem stellt eine technische Lösung für ein technisches Problem dar, welches darin besteht, voneinander isolierte Vorgänge nicht zuordnen zu können. Mit der erfindungsgemäßen Lösung wird ein Datenbanksystem bereitgestellt, welches initialisierend mit gerätebezogenen Daten versehen wird. Dies kann zentralisiert vom Hersteller erfolgen, oder in einer entsprechenden Zentrale unter Angabe von Informationen, die vom Hersteller oder dem ersten Institut kommen, bei welchem eine Finanzierungsanfrage vorliegt. In besonders vorteilhafter Weise wird mit der Erfindung vorgeschlagen, einem einschlägigen Gegenstand eine Codierung zuzuordnen, welche zusammen mit gerätebezogenen Informationen wie beispielsweise Hersteller, Gerät, Gerätenummer, gegebenenfalls weitere spezifizierende Merkmale und Codierung, gespeichert werden.

Soll das Geräte Gegenstand einer Finanzierung werden, kann das Finanzierungsinstitut unter Angabe der Codierung, der Gerätenummer oder anderer eindeutig spezifizierender Angaben eine Abfrage starten und so darüber Informationen erlangen, ob das Gerät bereits Gegenstand einer Finanzierung war oder nicht.

Es läßt sich somit in Analogie zu einem Grundbuch oder einer Schufa-Auskunft feststellen, ob ein Gegenstand bereits mit Rechten Dritter belastet, finanziert, verleast oder sonstwie zum Geschäftsgegenstand gemacht wurde.

Die Eintragung der Daten sollte vorzugsweise durch Abfrage einer Codierung autorisierten Personen vorbehalten sein, ebenso wie die Abfrage eine Autorisierung umfassen sollte. Das System ist vorzugsweise geeignet, in einem Datenfernübertragungssystem (DFÜ) eingesetzt zu werden, vorzugsweise im Internet.

Mit der Erfindung wird ein einfach aufgebautes und realisierbares Sicherheitskontrollsystem für gerätebezogene Finanzierungsvorgänge bereitgestellt, welches auf einfache, kostengünstige und praktikable Weise das Problem der Mehrfachlegende eines Gerätes löst.

## Patentansprüche

1. Sicherheitskontrollsystem für gerätebezogene Finanzierungsvorgänge, umfassend wenigstens eine im wesentlichen zentral geführte Datenbank, in welcher für eine Gerät gerätetypische Daten aufgenommen und im Falle eines Finanzierungsvorganges finanzierungstypische Daten abfragbar ergänzt werden, eine Eintragungssoftware für die Datenaufnahme und -ergänzung sowie eine Abfragesoftware für die Abfrage von gerätebezogenen Finanzierungsvorgängen, wobei wenigstens die Abfragesoftware für eine Fernabfrage ausgelegt und auf einem Rechnernetzsystem installierbar ist.

2. Sicherheitskontrollsystem nach Anspruch 1, dadurch gekennzeichnet, daß die Eintragungssoftware nur durch autorisiertes Personal bedienbar ist.

3. Sicherheitskontrollsystem nach einem der vorhergehenden Ansprüche, dadurch gekennzeichnet, daß für die Nutzung der Abfragesoftware ein Autorisierungscode vorgesehen ist.

4. Sicherheitskontrollsystem nach einem der vorhergehenden Ansprüche, dadurch gekennzeichnet, daß das System auf einem DFÜ-Rechnernetz installiert ist.

5. Sicherheitskontrollsystem nach einem der vorhergehenden Ansprüche, dadurch gekennzeichnet, daß dieses über das Internet betreibbar ist.

6. Sicherheitskontrollsystem nach einem der vorhergehenden Ansprüche, dadurch gekennzeichnet, daß die gerätetypischen Daten eine vom Gerätehersteller bereitgestellte Codierung umfassen.

7. Sicherheitskontrollsystem nach einem der vorhergehenden Ansprüche, dadurch gekennzeichnet, daß die Aufnahme der gerätetypischen Daten direkt von den Geräteherstellern zentralisiert durchgeführt wird.

8. Sicherheitskontrollsystem nach einem der vorhergehenden Ansprüche, dadurch gekennzeichnet, daß die Abfrage unter Angabe einer gerätebezogenen Codierung vom Finanzierer diesem Informationen über bisherige Finanzierungsvorgänge gibt.

9. Sicherheitskontrollsystem nach einem der vorhergehenden Ansprüche, dadurch gekennzeichnet, daß einem Geräte bei dessen Herstellung zentralisiert eine Codierung zugeordnet wird, die dem Geräte während seiner Nutzungszeit zugeordnet bleibt.
